# EUROPEAN PATENT APPLICATION

(11) **EP 0 580 219 A1**
(43) Date of publication of application: **26.01.1994**
(21) Application number: 93202046.4
(22) Date of filing: 12.07.1993
(51) Int. Cl.: B29C 37/00, B29C 41/08, C08G 18/67

(54) **Process for the production of a coated, three-dimensionally shaped object**

(30) Priority: 21.07.1992 NL 9201304
(71) Applicant: DSM N.V., NL-6411 TE Heerlen (NL)
(72) Inventor: De Koning, Adrianus Johannes, NL-8014 KA Zwolle (NL); Rotteveel, Marc Antony, NL-3135 GZ Vlaardingen (NL)

(57) **Abstract**

The invention relates to a process for the production of a coated, three-dimensionally shaped object by shaping an amount of synthetic material in a mould in which at least one of the mould walls is at least in part covered with a thermosetting powder before the mould is filled with the thermosetting material, which powder melts and at least in part hardens, following which the synthetic material is introduced into the mould, the mould is closed and an elevated temperature and optionally an elevated pressure is applied, the powder consisting of at least a reaction product of at least the components a) a bifunctional hydroxy-terminated compound, with b) a polyisocyanate and c) a hydroxy-terminated unsaturated compound.

## Description

The invention relates to a process for the production of a coated, three-dimensionally shaped object by shaping an amount of synthetic material in a mould in which at least one of the mould walls is at least in part covered with a thermosetting powder before the mould is filled with the synthetic material, which powder melts and at least in part hardens, following which the synthetic material is introduced into the mould, the mould is closed and an elevated temperature and optionally an elevated pressure is applied.

Such a process is known from EP-B-0.001.865, in which use is made of a thermosetting powder based on a polymer that is a condensation product of polyvalent alcohols and polyvalent ethylenically unsaturated and saturated carboxylic acids or carboxylic anhydrides. The polymer is crosslinked with a mixture of triallyl isocyanurate or triallyl cyanurate and a prepolymer of polydiallyl phthalate.

Thermosetting powders applied in such processes are preferably stable during storage. Desirably the powder does not clot or undergo any other physical changes. The storage temperature is preferably room temperature.

Another requirement to be met by such a powder is that it must have good a flow at the processing temperature, before curing takes place, so that a coating with a tight surface can be obtained. The processing temperature is preferably not too high, for example about 150°C.

A third requirement to be met by the powder is that the coating obtained must have good mechanical properties and a good temperature resistance. The flow at the processing temperature can be improved by incorporating flexible chain segments in the polymer. However, this gives rise to an undesirable deterioration of the storage stability and the temperature properties of the coating.

A fourth requirement is that the layer formed by the powder, after melting and at least partial hardening, must have sufficient shear resistance. Shear resistance is important because when the mold is closed the synthetic material must be distributed over the surface of the layer, without the layer being locally forced away. In many cases the synthetic material is heaped up or deposited in the centre of the mold and subsequently forced to all parts of the mold when the mold is closed. This may give rise to rather high shearing forces on the layer. Ideally, the layer thickness is everywhere almost the same after mold closure.

The disadvantage of a process according to EP-B-0,001,865 is that the powder used according to that process does not adequately meet the above requirements.

It is an object of the invention to provide a process not having this disadvantage.

The objects of the present invention are achieved by carrying out such process using a thermosetting powder that comprises a reaction product of at least the components a) a bifunctional hydroxy-terminated compound, with b) a polyisocyanate and c) a hydroxy-terminated unsaturated compound.

Preferably, component c) consists of a (meth)acrylate, allyl or vinyl ether compound. More preferably, component c) is a (meth)acrylate or allyl compound.

Preferably, the powder comprises of a compound of the following formula:

B-I-[-A-M-]_{q}-A-I-B (1)

where:
q is an integer from 0 to 12
A is a radical derived from a bivalent alcohol
M is a radical derived from i) an unsaturated aliphatic dicarboxylic acid or an anhydride thereof, ii) a saturated aliphatic dicarboxylic acid or anhydride thereof, iii) an aromatic dicarboxylic acid or anhydride thereof, or iv) mixtures of i), ii) and/or iii);
I is a radical derived from an isocyanate, with an average isocyanate functionality of two or higher; and
B is a radical derived from a hydroxy-terminated, ethylenically unsaturated compound, such as a monohydroxy-terminated ester of acrylic acid or methacrylic acid or a hydroxy-terminated allyl compound or a hydroxy-terminated vinyl ether or a mixture of these; Optionally, B may consist in part of a radical derived from a saturated monofunctional alcohol. Preferably, however, B is entirely ethylenically B is preferably an acrylate since acrylates generally possess a higher reactivity than allyl compounds and can be produced more economically.

The radicals A, M and I may optionally consist in part of polyfunctional structures. The result will be that the compound has branches or crosslinks.

As used herein, the term "branch" means that the linear polymer chain diverges into two or more branches.

As used herein, the term "crosslink" means that two or more polymer chains are interconnected. When crosslinking proceeds further, this would lead to a three-dimensional structure, which, however, is undesirable for the invention. When the proportion of polyfunctional structures is low, the powder will in practice behave like a non-crosslinked polymer.

Preferably, q is one on average.

Preferably, A in formula (1) is a polyoxyalkylene bisphenol-A of the following formula: 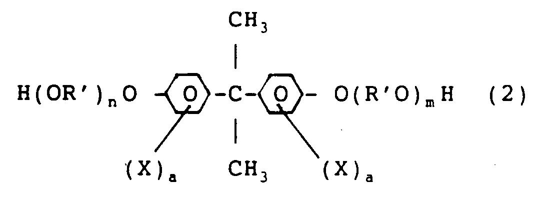
where:
R' is a C₁-C₄ alkylene group,
X is a halogen or a C₁-C₄ alkyl group,
a is an integer from 0 to 2; and
m and n are integers which are both at least 1, their sum being approximately 2 to 12. Preferably, m + n equals 2 to 8, and more preferably m + n equals 2 to 4.

Such a compound is described in US Patent No. 4,182,830, which, however, does not state that the resin is particularly suitable for carrying out a process according to the invention.

A in formula (1) may also be a radical derived from a hydrogenated bisphenol-A.

M in formula (1) is preferably a radical derived from an unsaturated α,β-dicarboxylic acid or α,β-dicarboxylic anhydride, and more preferably it is derived from fumaric acid or maleic anhydride.

B is preferably a radical of an ester as described in US Patent No. 4,182,830. More preferably, B is 2-hydroxyethyl methacrylate, 2-hydroxypropyl methacrylate or a further alkoxylated version of either.

From EP-A-0.410.242 (or its US-equivalent US-A-5.068.305) it is known to use an acrylate terminated urethane as binder in powder coatings. But EP-A-0.410.242 does not disclose nor hint at the possibility to use such powder in the process according to the invention.

From EP-A-0.039.588 it is known to use an acrylate terminated urethane in a liquid coating composition for liquid in-mould coating, i.e. coating an object in a mold after the object has been compression molded with a liquid coating, closing the mold and curing the coating composition. EP-A-0.039.588 does not disclose nor hint at the possibility to make powder coating and to use that in the process according to the invention.

In preparing compositions for use in the process of the present invention, it is possible to add mainly compounds in which B is an ester as disclosed in U.S. Patent No. 4,182,830, and to add a portion of compounds in which B is a radical derived from an allyl compound. Examples of such allyl compounds are allyl alcohol and trimethylol propane diallyl ether. Examples of hydroxy-terminated vinyl ethers are triethylene glycol monovinyl ether, 1,4-cyclohexane dimethylol monovinyl ether and 4-hydroxybutyl vinyl ether.

The polyisocyanate may for example be an aliphatic, an aromatic or a cycloaliphatic polyisocyanate, or a combination of two or more types. Examples are: toluene diisocyanate, 1,5-naphthalene diisocyanate, cumene-2,4-diisocyanate, 4-methoxy-1,3-phenylene diisocyanate, 4-chloro-1,3-phenylene diisocyanate, 4-bromo-1,3-phenylene diisocyanate, 4-ethoxy-1,3-phenylene diisocyanate, 2,4'-diisocyanato diphenylether, 5,6-dimethyl-1,3-phenylene diisocyanate, 2,4-dimethyl-1,3-phenylene diisocyanate, 4,4'-diisocyanate diphenyl ether, benzidine diisocyanate, 4,6-dimethyl-1,3-phenylene diisocyanate, durene diisocyanate, 4,4'-diisocyanate dibenzyl, 3,3'-dimethyl-4,4'-diisocyanate-diphenyl, 2,4-diisocyanate stilbene, 3,3'-dimethoxy-4,4'-diisocyanate phenyl methane, 3,3'-dimethoxy-4,4'-diisocyanate diphenyl, 1,4-anthracene diisocyanate, 2,5-fluorene diisocyanate, 1,8-naphthalene diisocyanate, 2,6-diisocyanato benzfuranamylbenzene-2,4-diisocyanate, hexyl benzene-2,4-diisocyanate, dodecyl benzene-2,4-diisocyanate, butyl benzene-2,4-diisocyanate.

Preferably, the isocyanate consists of diphenyl methane-4,4'-diisocyanate (MDI), toluene diisocyanate, hydrogenated MDI or isophorone diisocyanate (IPDI).

The powder may consist wholly of the reaction products as described, or the powder may consist in part of other resins, such as ordinary unsaturated polyester resins. Other resins can be admixed up to a percentage at which the property profile is not adversely affected. Preferably, no other resin is admixed.

The invention further relates to a powder as described in this description, which can be used in a process according to the invention, the powder having an average diameter between 80 and 125 µm.

In addition, the powder may contain the customary additives, such as pigments, fillers, release agents, inhibitors, peroxides, crosslinkers, anti-degradation agents, such as UV stabilizers, glass spheres (beads), degasifying agents, etc.

Instead of components b) (the polyisocyanate) and component c) (the hydroxy-terminated (meth)acrylate), or instead of a part of these components it is possible to apply a compound combining the functionalities of both components, such as methacrylol isocyanate (MAI). MAI has the following structural formula: 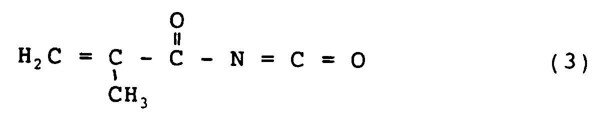
and can be obtained from SNPE Chimie, Paris, France. The main difference between a compound according to the invention which contains MAI and a compound according to formula (I) is that the former holds one urethane bond less than compounds of formula (I). This, however, does not have such an effect as to place the use of MAI outside the scope of the invention.

It is also possible to replace the components with hydroxy functionalities with a portion of components having another functionality which is reactive with isocyanate groups, such as, for example, an amine group. In place of the bifunctional hydroxy-terminated compound, for example, an amino alcohol or a diamine could be used, without deviating substantially from the invention. The reaction product then possesses some urea groups in place of urethane groups.

Additional (solid) crosslinkers may be added, such as: prepolymers of poly(diallyl phthalate), poly(diallyl isophthalate), triallyl cyanurate, triallyl isocyanurate, trimethylallyl cyanurate, trimethylallyl (iso)cyanurate or triallyl trimellitate. Addition of 0.5 to 30 wt.% with respect to the compound, and preferably 10-20 wt.% of these crosslinkers has a positive effect on the post-curing properties. This implies that the curing reaction proceeds to a further stage, which is advantageous especially in a process in which products are shaped in a short cycle time. If, for example, the cycle time is shorter than 5 minutes, curing of the coating has preferably progressed as far as possible within those 5 minutes, implying that the largest possible proportion of the reactive bonds has reacted.

Surprisingly, the shear resistance of a layer of melted and at least partly hardened powder which also contains 0.5 to 10 wt.% of this additional crosslinker appears to have increased substantially.

Added advantages of a process according to the invention are the high reactivity of the resin and the good corrosion resistance of the products obtained from it. Furthermore, the resin has a narrow melting range between 70 and 90°C, rather than a long melting range like resins according to EP-B-0.001.865. The powder is solid and stable upon storage at room temperature, has a good flow at 150°C and yields a coating with surprisingly good mechanical and physical properties after curing.

The various components can a.o. be chosen from the compounds as described in US Patent No. 4,182,830, the disclosure of which is incorporated by reference in the present application.

The process according to the invention can be carried out with all the details as described in EP-B-0.001.865 or EP-A-019.314, or the US counterparts US Patent No. 4,228,113 or US Patent No. 4,287,310, respectively, the disclosures of which are hereby incorporated by reference in the present application.

The synthetic material with which the mold is filled may be any type of synthetic material used for making molding products. Preferably, the synthetic material is a mixture of thermosetting resin and fibrous reinforcement material. Such a mixture is, for example, a commercially available composition such as sheet molding compound (SMC), bulk molding compound (BMC), dough molding compound (DMC), epoxy molding compounds or melamine formaldehyde compounds (MFC). These compounds are described in, for example, Lubin's Handbook of Composites, published by Nostrand Reinhold Company, 1982.

The resin of the composition preferably consists of unsaturated polyester. The composition is generally applied in such an amount that an object of the desired thickness, and thus the desired mechanical properties, is obtained. A coated bathtub, for example, will contain about 10 kg of SMC and be produced in a thickness of about 5 mm. The coating thickness is generally about 200 µm.

The powder preferably applied according to the invention has a melting point between 70 and 90°C and is stable upon storage at room temperature. It has terminal unsaturations because of the (meth)acrylate esters and any allyl or vinyl ether compounds and non-terminal unsaturations because of any unsaturated dicarboxylic acids or dicarboxylic anhydrides.

Preferably, the hydroxy-terminated compound a) consists, as indicated in formula (1), of the compound the radical of which meets [-A-M-]_{q}-A-. Compound a) then is a condensation product of a diol and a dicarboxylic acid.

The condensation product is obtained by causing component A and component B to react in a molar ratio of 11:10 to 2:1. Preferably, both components are caused to react in a ratio of approximately 2:1. The resulting condensation product is mainly a diester with hydroxy-terminated groups. The product will consist of a mixture of diol, diester, triester and optionally even a small amount of higher molecular oligomers. The average number of units per oligomer of the mixture will be 3.

At 80 to 130°C the condensation product a) is caused to react, in the presence of an urethane catalyst, with approximately two mole equivalents of component c) and an amount of component b) that ensures that the number of isocyanate groups is virtually the same as the number of hydroxy groups. If the functionality of product a) is higher than 2, a proportionally higher amount of component c) is generally used.

The elevated temperature employed according to the process of the invention lies between 100 and 200°C, and preferably between 120 and 170°C. At that temperature the flow of the reaction product is good.

It is possible to cure the synthetic material under pressure. The pressure used may range from normal pressure to more than 100 bar.

A process according to the invention can be applied in fields where there is a need for three-dimensional objects having a good surface quality, for instance for sanitary use, in car body parts (primer coating layer) or in aerospace applications. The coating has good high temperature properties, a good corrosion resistance, a fine, smooth surface without orange peel and without fractures, porosities, cracks, warpage or blister formation in the form of, for instance, pinholes or fish eyes. Adhesion to the compound is excellent.

The invention will be elucidated on the basis of the following examples, without being limited thereto.

The glass transition temperature (Tg) was measured by means of dynamic mechanical analysis (DMA).

The acid and hydroxyl numbers were measured in conformity with DIN 53402 and DIN 53420, respectively.

The isocyanate content was determined through a reaction of the sample with an excess of di-n-butylamine and back titration of the amine excess with hydrochloric acid.

The viscosity was measured using falling sphere viscometry.

### Example I

### Synthesis of the hydroxy-terminated compound (a)

In a 10 l metal reactor provided with a stirrer, a nitrogen inlet tube and a distillation column, 6880 g (20 moles) of propoxylated bisphenol-A (BPA.2PO) was reacted with 980 g (10 moles) of maleic anhydride at a temperature of 210°C. The water formed was distilled off. The reaction was continued until the acid number was 5. The hydroxyl number was 150 mg KOH/g.

### Example II

### Synthesis of the resin

In a 2 l glass flask provided with stirrer and nitrogen inlet tube, a) an amount of 690 g (about 0.95 moles) of the product of Example I was mixed at 50°C with c) 262 g (1.82 moles) of 2-hydroxypropyl methacrylate (HPMA) in the presence of 1.38 g of hydroquinone, 0.83 g of di-tert butyl-p-cresol and 0.76 g of tin octoate (urethane catalyst). Dropwise, b) 310 g (1.78 moles) of toluene diisocyanate (consisting of 80% of the 2.4 isomer and 20% of the 2,6 isomer) was added to this mixture, care being taken that the temperature of the mixture did not exceed 120°C. From time to time mild cooling was applied. At regular intervals the isocyanate content was determined, and the reaction was stopped after about 20 minutes when the isocyanate content had dropped below 0.5 wt.%. After this the mixture was cooled.
The resin obtained had a melting range of 72-82°C, a glass transition temperature (Tg) of 53°C, an acid number of 4 and a viscosity at 150°C of 33 dPa.s.

### Example III

### Synthesis of the resin

The process of Example II was repeated, 2-hydroxymethyl methacrylate (HEMA) being used as c) in place of HPMA. The properties of the resin obtained are presented in Table 1.

### Example IV

### Synthesis of the resin

The process of Example II was repeated, a propoxylated bisphenol-A (BPA.2PO) being used as c) in place of the hydroxy-terminated compound from Example I. The properties of the resin obtained are presented in Table 1.

### Example V

### Synthesis of the resin

The process of Example II was repeated, trimethylol propane diallyl ether (TMP-DAE) being used as c) in place of HEMA. The properties of the resin obtained are presented in Table 1.

**Table 1**

| Properties of the resin in Examples II-V | | | | | | |
|---|---|---|---|---|---|---|
| Ex. | compound a) | compound b) | melting range (°C) | viscosity (dPa.s at 150°C) | Tg (°C) | acid number (mg KOH/g) |
| | | | | | | |
| II | Ex. I | HPMA | 72-82 | 33 | 53 | 4.0 |
| III | Ex. I | HEMA | 66-86 | 30 | 51 | 5.5 |
| IV | BPA.2PO | HPMA | 72-79 | 164* | 50 | 0.5 |
| V | Ex. I | TMP-DAE | 65-66 | 36** | 34 | 5.0 |

| | | | | | | |
|---|---|---|---|---|---|---|
| * measured at 120°C | | | | | | |
| ** measured at 140°C | | | | | | |

### Example VI

### Preparation of the thermosetting powder

In an extruder a mixture of 96.5 parts of resin from Example II and 1.85 parts of zinc stearate (as release agent) were melted up to 90°C. Optionally, additional crosslinkers (for example poly(diallyl phthalate) or triallyl cyanurate), inhibitors, pigments and/or fillers (e.g. CaCO₃) can be added.

At the end of the extruder cycle 1.65 parts of tert. butyl perbenzoate (radical initiator) and 0.15 parts of cobalt octoate (accelerator) were added.

The homogeneous melt leaving the extruder was rolled, cooled and flaked. To the flakes 2 parts of silicon powder (Aerosol©) were added as conditioner and 2 parts of zinc stearate as additional release agent to improve the powder's storage stability and free-flowing properties even further. Subsequently, cryogenic grinding was applied. The powder formed was screened to a particle size of at most 150 µm.

### Example VII

### Preparation of the thermosetting powder

The process of Example VI was used with the resin from Example IV in place of the resin from Example II.

### Comparative experiment A

The process of Example VI was repeated using the following mixture:
69.8 parts of unsaturated polyester resin (UP)
22.0 parts of DAP prepolymer
4.8 parts of triallyl cyanurate
1.8 parts of zinc stearate
1.6 parts of tert butyl perbenzoate
The UP, tradename Synolite VG 773, was obtained from DSM Resins BV in Zwolle, The Netherlands, and consisted of propoxylated bisphenol-A (Dianol 3.3©), neopentyl glycol and maleic anhydride (1:1:2 mol/mol/mol). It was stabilized with 250 ppm of mono-tert.butyl hydroquinone and had a viscosity of 150 dPa.s at 150°C and an acid number of 22.

### Determination of the mechanical properties

Of the powder of Examples VI and VII and comparative experiment A rods of varying dimensions were molded at 150°C, the molding time being 240 seconds. These rods were used for determination of the mechanical properties given in Table 2.

**Table 2**

| Mechanical properties | | | |
|---|---|---|---|
| Ex./Exp/ | VI | VII | A |
| | | | |
| Flexural strength (ISO 178) (Mpa) | 10.7 | 101 | 70 |
| Flexural modulus (ISO 178) (GPa) | 3.9 | 3.7 | 3.8 |
| Deflection at break (mm) | 4.8 | 4.5 | 2.9 |
| HDT (ISO 75) (°C) | 109 | 115 | 85 |
| Impact strength (ISO-R-179) (kJ/m2) | 12.2 | 9.9 | 3.5 |
| Barcol hardness (ASTM-D-2583) | 42 | 42 | 45 |

The table shows that the mechanical properties as well as the high temperature properties of the materials according to the invention are substantially better compared with the state of the art.

### Determination of the powder storage stability

The powder storage stability of the powders of Examples VI and VII and comparative experiment A was determined by storing the powders at different temperatures and checking whether clotting of the powders takes place. At 25 and 30°C the powders of Examples VI and VII proved to be stable for longer than 21 days. At 40°C they appeared to be stable for at least 14 days.

At 25°C the powder of comparative experiment was stable for only 25 to 40 hours, and at 30°C for only 8 to 10 hours. At 40°C the powder was not stable at all.

### Spraying test

The powder of Example VI was electrostatically sprayed onto a metal mold with a temperature of 150°C until the layer thickness was about 200 µm. After a period of 60 seconds an amount of SMC was applied and the mold was closed. Curing took place at 150°C during 240 seconds.

The surface was tight and exhibited a good gloss; the paintability and hiding power were excellent.

## Claims

1. Process for producing a coated, three-dimensionally shaped object by shaping an amount of synthetic material in a mould in which at least one of the mould walls is at least in part covered with a thermosetting powder before the mould is filled with the synthetic material, which powder melts and at least in part hardens, following which the synthetic material is introduced into the mould, the mould is closed and an elevated temperature and optionally an elevated pressure is applied, this process being characterized in that the powder consists at least of a reaction product of at least the components a) a bifunctional hydroxy-terminated compound, with b) a polyisocyanate and c) a hydroxy-terminated, ethylenically unsaturated compound.

2. Process according to claim 1, characterized in that component c) is a hydroxy-terminated (meth)acrylate or allyl compound.

3. Process for producing a coated, three-dimensionally shaped object by shaping an amount of synthetic material in a mould in which at least one of the mould walls is at least in part covered with a thermosetting powder before the mould is filled with the synthetic material, which powder melts and at least in part hardens, following which the synthetic material is introduced into the mould, the mould is closed and an elevated temperature and optionally an elevated pressure is applied, this process being characterized in that the powder consists of a compound of the following formula:
B-I-[-A-M-]_{q-}A-I-B (1)
where:
A is a radical derived from a bivalent alcohol;
M is a radical derived from i) an unsaturated aliphatic dicarboxylic acid or an anhydride thereof, ii) a saturated aliphatic dicarboxylic acid or anhydride thereof, iii) an aromatic dicarboxylic acid or anhydride thereof, or iv) mixtures of i), ii) and/or iii);
I is a radical derived from an isocyanate with an average isocyanate functionality of two or higher;
B is a radical derived from a monohydroxy-terminated ester of acrylic acid or methacrylic acid or is derived from another hydroxy-terminated, ethylenically unsaturated compound or a mixture of these.

4. Process according to claim 3, characterized in that A in formula (1) is a polyoxyalkylene bisphenol-A of the following formula: 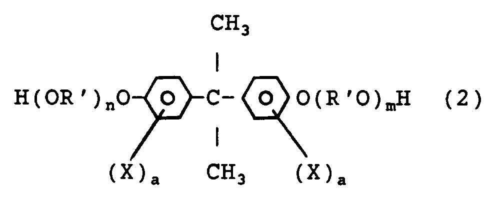 where R' is a C₁₋C₄ alkylene group,
X is a halogen or a C₁₋C₄ alkyl group,
a is an integer from 0 to 2, and
m and n are integers which are both at least 1, their sum being approximately 2 to 12.

5. Process according to claim 4, characterized in that the sum of m and n is approximately 2 to 8.

6. Process according to claim 5, characterized in that the sum of m and h is approximately 2 to 4.

7. Process according to any one of claims 3-6, characterized in that M is a radical derived from fumaric acid or maleic anhydride.

8. Process according to any one of claims 3-7, characterized in that B is a radical derived from 2-hydroxyethyl (meth)acrylate, 2-hydroxypropyl (meth)acrylate or a higher alkylated version of either.

9. Process according to claim 1 or 2, characterized in that component b) is toluene diisocyanate.

10. Process according to any one of claims 1-9, characterized in that 0.5 to 10 wt.%, with respect to the compound, is added of a crosslinker chosen from the group formed by poly(diallyl phthalate), poly(diallyl isophthalate), triallyl cyanurate, triallyl isocyanurate, trimethallyl cyanurate, trimethallyl (iso)cyanurate or triallyl trimellitate.

11. Process according to any one of claims 1-10, characterized in that the elevated temperature lies between 100 and 200°C.

12. Process according to any one of claims 1-11, characterized in that the elevated temperature lies between 120 and 170°C.

13. Coated, three-dimensionally shaped object obtainable by a method according to any one of claims 1-12.

14. Powder, as described in any one of claims 1-12, for use in a process according to any one of claims 1-12. characterized in that the powder consists of particles having an average diameter of between 80 and 250 µm.
